# EUROPEAN PATENT APPLICATION

(11) **EP 2 474 736 A1**
(43) Date of publication of application: **11.07.2012**
(21) Application number: 09848958.6
(22) Date of filing: 02.09.2009
(51) Int. Cl.: F03D 11/02, F03D 9/00

(54) **WIND DRIVEN GENERATOR**

(71) Applicant: Mitsubishi Heavy Industries, Ltd., Tokyo 108-8215 (JP)
(72) Inventor: YOSHIDA, Takafumi, Nagasaki-shi Nagasaki 851-0392 (JP); SHODA, Katsuhiko, Nagasaki-shi Nagasaki 851-0392 (JP); NAKAYAMA, Shin, Nagasaki-shi Nagasaki 851-0392 (JP)
(74) Representative: Intès, Didier Gérard André
(86) International application number: PCT/JP2009/065318
(87) International publication number: WO 2011/027427

(57) **Abstract**

A wind turbine generator including a low-cost drive train that allows for reduced weight and reduced length in the axial direction is provided, In a wind turbine generator that generates electricity by driving a generator coupled, by means of a drive train, to a rotor head that has wind-turbine rotor blades attached thereto and rotates together therewith, a gear box (20) of the drive train that transmits torque from the rotor head to the generator includes a star-type gear-box mechanism serving as a first-stage gear-box unit and integrated with a main bearing (50).

## Description

### {Technical Field}

The present invention relates to wind turbine generators that generate electricity by using a wind turbine that converts natural wind energy into torque.

### {Background Art}

In the related art, wind turbine generators that generate electricity by utilizing wind force, which is natural energy, are known. A wind turbine generator of this type is provided with a rotor head, which is provided on a nacelle mounted on a tower and has wind-turbine rotor blades (also called "wind-turbine blades") attached thereto; a main shaft coupled to this rotor head so as to rotate together therewith; a gear box coupled to the main shaft that rotates in response to wind force received by the wind-turbine blades; and a generator driven by a shaft output of the gear box, and appropriate positions are supported by bearings. In a wind turbine generator having such a configuration, the rotor head, which is equipped with the wind-turbine blades that concert wind force into torque, and the main shaft rotate so as to generate a shaft output, and the shaft output, which has increased rotation speed by means of the gear box coupled to the main shaft, is transmitted to the generator. Therefore, the shaft output obtained by converting wind force into torque acts as a driving source for the generator, whereby electricity can be generated by utilizing the wind force as power for the generator.

In a wind turbine generator, a drive train has functions for (1) supporting wind load, (2) transmitting torque, and (3) increasing the rotation speed of the rotor head. In the drive train of the related art, the main shaft is usually supported by two bearings, and the gear box is disposed therebehind.
With regard to a wind turbine generator in which a hub of a rotor is fixed to a planetary holder of planetary gears, an extremely compact wind turbine generator that generates extremely large electric power while ensuring that a bearing of the planetary holder possesses predetermined elasticity has been proposed. In this case, the gear box is of a planetary type equipped with planetary gears (for example, see PTL 1).

A compact wind turbine generator with excellent ease of installation, ease of repair, and ease of monitoring has been proposed. In this wind turbine generator, a planetary-gear-type (planetary-type) power transmission device is used (for example, see PTL 2).

### {Citation List}

### {Patent Literature}

{PTL 1}
   U.S. Patent No. 6872049
{PTL 2}
   Japanese Unexamined Patent Application, Publication No. 2000-337245

### {Summary of Invention}

### {Technical Problem}

In recent years, wind turbine generators have tended to grow in size with an increase in output power, and devices constituting the drive train have correspondingly grown in size, resulting in increased weight. In particular, if the drive train has a gear box disposed on a main shaft supported by two bearings, not only is the weight thereof increased due to the increased size, but the length in the axial direction is also increased. For this reason, there are problems in that the loads on the tower and the foundation increase and that the task of installing the nacelle on the upper section of the tower becomes difficult.
A planetary-type gear box with revolving planetary gears has a problem in terms of lubrication since it is lubricated by means of an oil bath provided below the revolution trajectory, and the lubrication is thus difficult at positions distant from the oil bath.

Due to these circumstances, a wind turbine generator including a low-cost drive train that allows for reduced weight and reduced length in the axial direction is desired.
The present invention has been made in view of the circumstances described above, and an object thereof is to provide a wind turbine generator including a low-cost drive train that allows for reduced weight and reduced length in the axial direction.

### {Solution to Problem}

In order to solve the aforementioned problems, the present invention employs the following solutions.
A wind turbine generator according to an aspect of the present invention generates electricity by driving a generator coupled, by means of a drive train, to a rotor head that has wind-turbine rotor blades attached thereto and rotates together therewith. In the wind turbine generator, a gear box of the drive train that transmits torque from the rotor head to the generator includes a star-type gear-box mechanism serving as a first-stage gear-box unit and integrated with a main bearing.

With such a wind turbine generator, since the gear box of the drive train that transmits the torque from the rotor head to the generator includes the star-type gear-box mechanism serving as the first-stage gear-box unit and integrated with the main bearing, the gear box can be made shorter in the axial direction, as well as being reduced in size and weight. Since a planetary member in the star-type gear-box mechanism does not revolve, lubrication is facilitated.

In the aforementioned aspect, the star-type gear-box mechanism preferably includes a sun member and a planetary member that are constituted of gears or traction drive members. In this case, the use of traction drive members can reduce noise during operation.

In the aforementioned aspect, the main bearing is preferably integrated with a ring member of the star-type gear-box mechanism. In this case, the ring member may be integrated with the main bearing by being fitted to an inner peripheral surface thereof, or a gear or a traction surface may be formed on the inner peripheral surface of the main bearing.

In the aforementioned aspect, the ring member is preferably interposed between bearings obtained by segmenting the main bearing into two sections in an axial direction, whereby the tolerance against moment acting on the main shaft is increased.

In the aforementioned aspect, the main bearing used is preferably of a pre-loaded type so that the contact force (i.e., pressing force) of a roller member disposed within the main bearing can be adjusted.

In the aforementioned aspect, the planetary member preferably has a rotation shaft that is supported at opposite sides thereof, whereby the load is distributed so as to prevent the occurrence of partial contact at a sliding section.

### {Advantageous Effects of Invention}

With the wind turbine generator according to the present invention described above, the gear box and the main bearing are integrated with each other so that the length of the drive train in the axial direction is reduced, thereby allowing for a reduction in the weight of the entire nacelle, including a nacelle base plate. Thus, the cost of the drive train itself is reduced due to the reduced size and weight thereof, and a reduction in load at the upper section of the tower of the wind turbine generator, which tends to grow in size with an increase in output power, can also be achieved. Since such a reduction in load at the upper section of the tower not only contributes to a reduction in the loads on the foundation and the tower but also simplifies the on-site installation process of the nacelle and the like that accommodates the drive train, the cost of the wind turbine generator can also be reduced with respect to these aspects.
Furthermore, since lubrication of the planetary member is facilitated, a wind turbine generator equipped with a highly durable and reliable gear box is obtained.

### {Brief Description of Drawings}

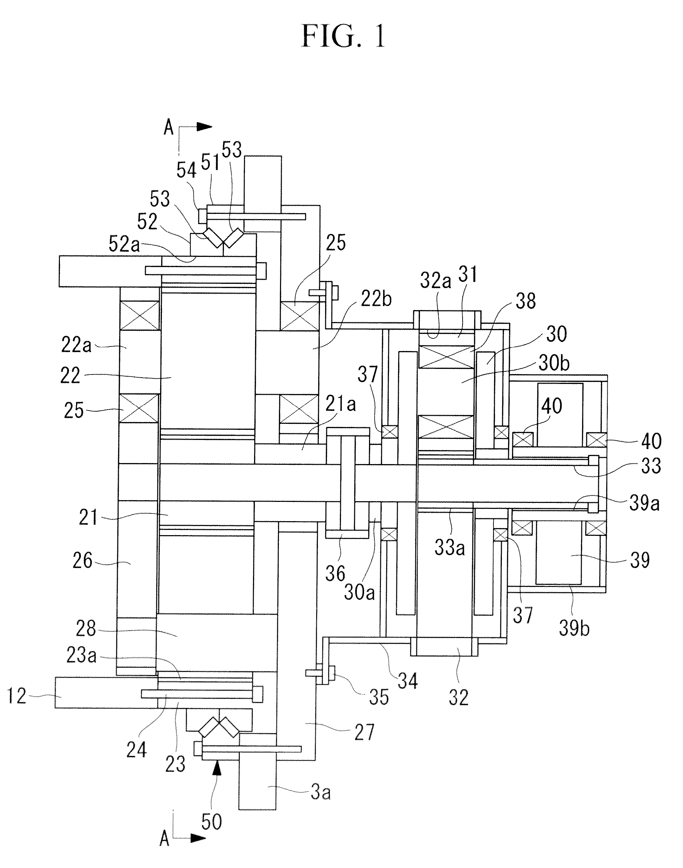

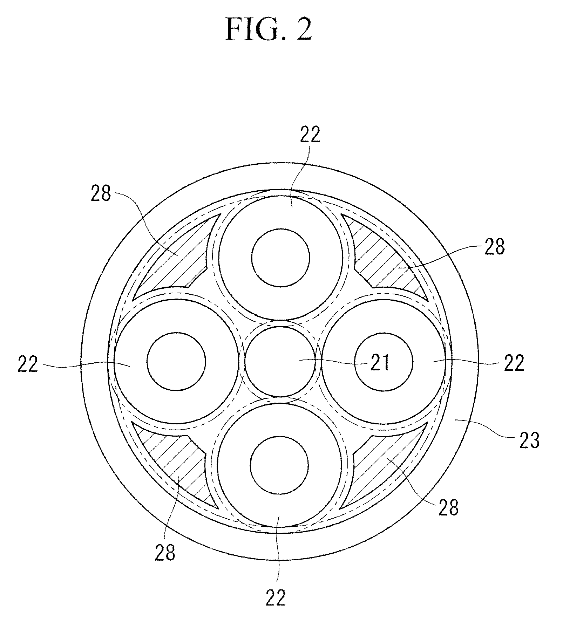

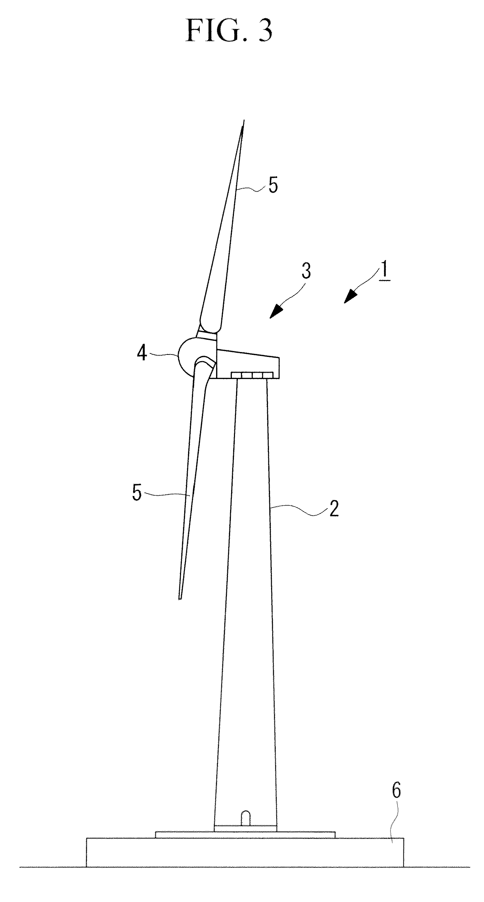

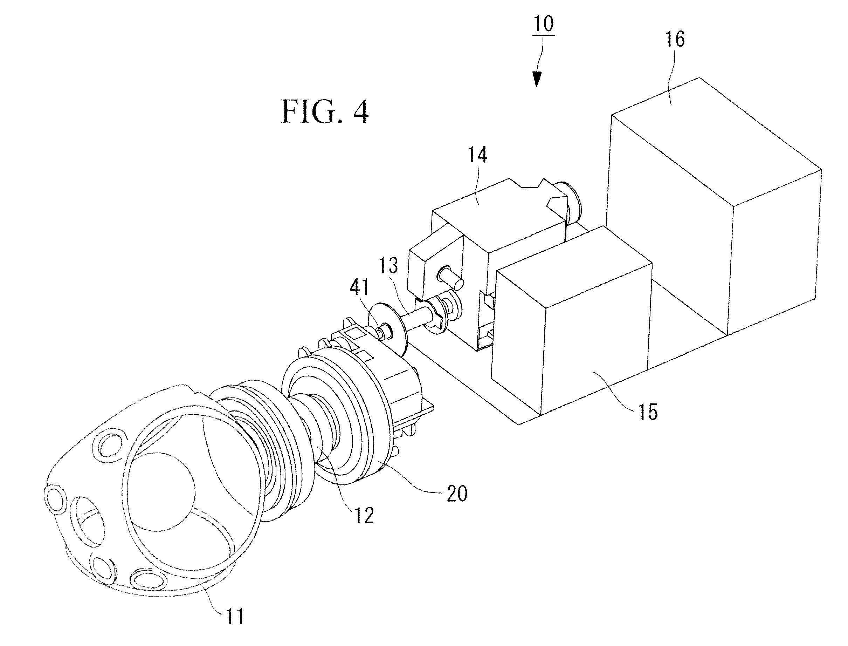

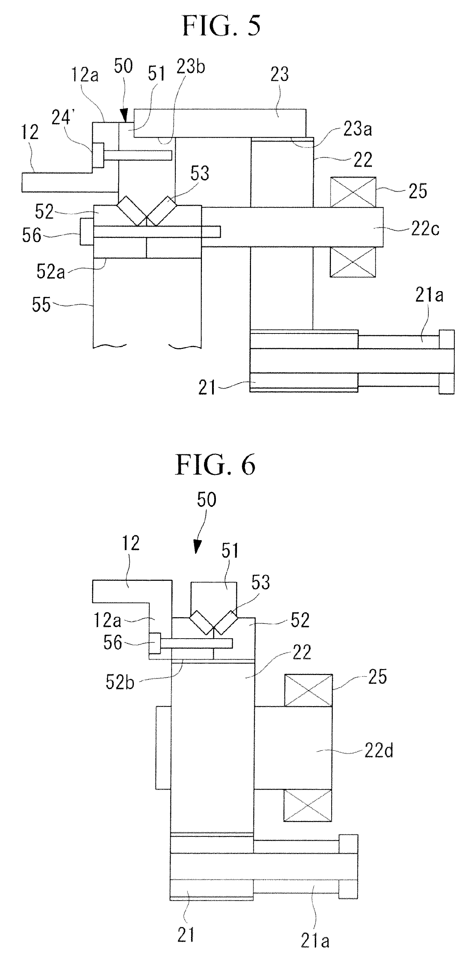

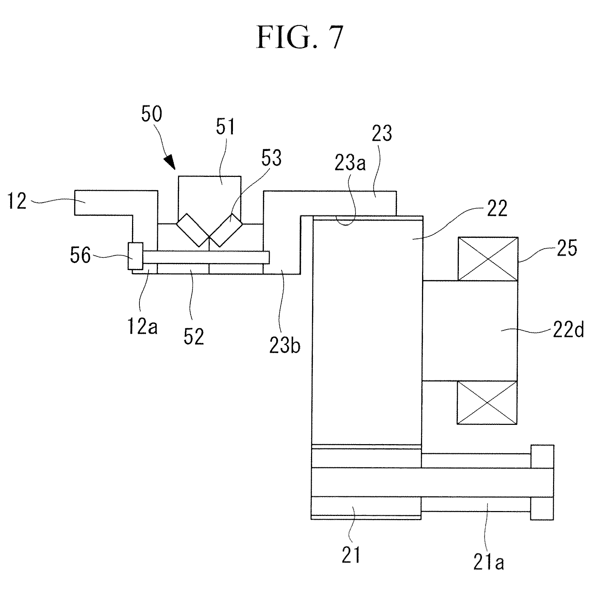

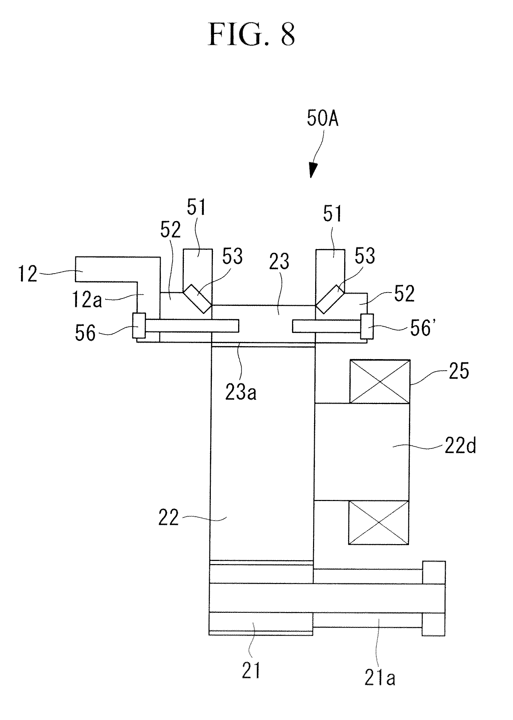

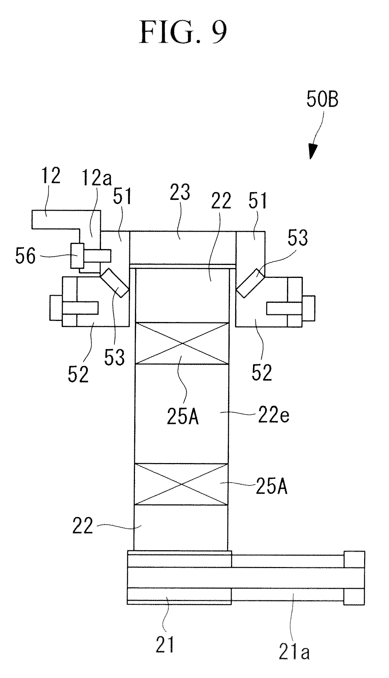

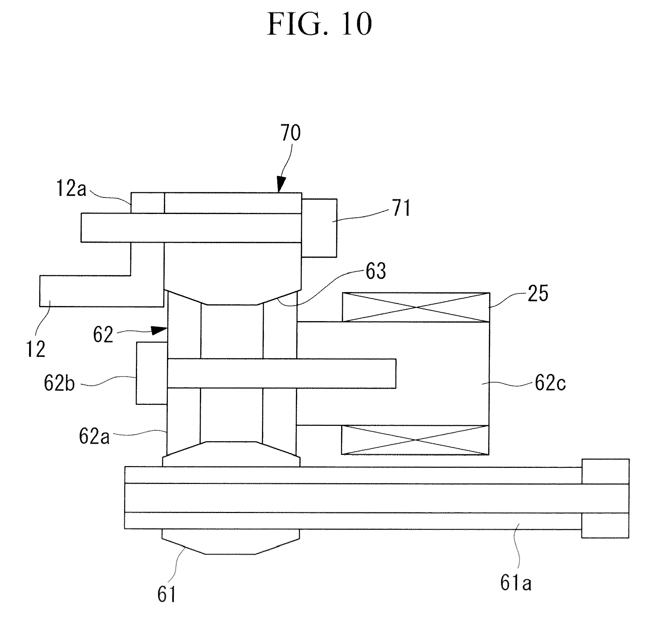

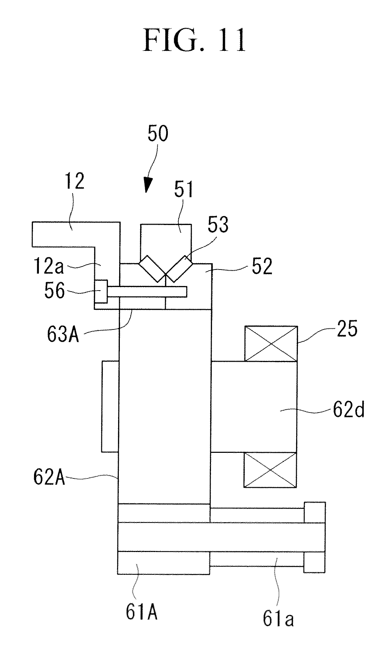

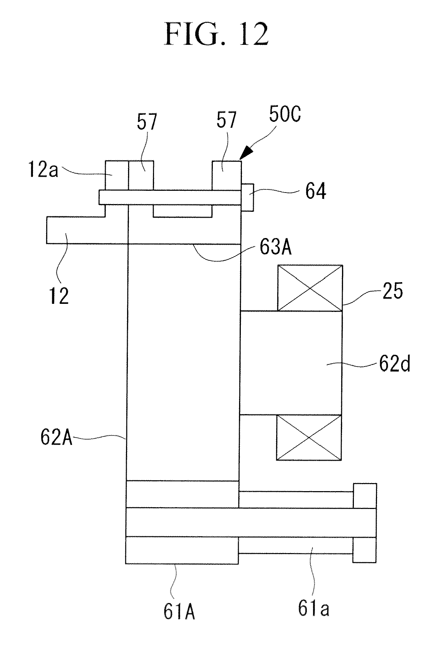

{Fig. 1} Fig. 1 is a cross-sectional view showing an embodiment of a wind turbine generator according to the invention, illustrating an example of the internal configuration of a gear box, as a first embodiment.
{Fig. 2} Fig. 2 is a cross-sectional view taken along line A-A in Fig. 1.
{Fig. 3} Fig. 3 illustrates an example of the overall configuration of the wind turbine generator.
{Fig. 4} Fig. 4 is a perspective view schematically illustrating a drive train.
{Fig. 5} Fig. 5 is a cross-sectional view showing a relevant part of a first modification of a first-stage gear-box unit in the internal configuration of the gear box shown in Fig. 1.
{Fig. 6} Fig. 6 is a cross-sectional view showing a relevant part of a second modification of the first-stage gear-box unit in the internal configuration of the gear box shown in Fig. 1.
{Fig. 7} Fig. 7 is a cross-sectional view showing a relevant part of a third modification of the first-stage gear-box unit in the internal configuration of the gear box shown in Fig. 1.
{Fig. 8} Fig. 8 is a cross-sectional view showing a relevant part of a fourth modification of the first-stage gear-box unit in the internal configuration of the gear box shown in Fig. 1.
{Fig. 9} Fig. 9 is a cross-sectional view showing a relevant part of a fifth modification of the first-stage gear-box unit in the internal configuration of the gear box shown in Fig. 1.
{Fig. 10} Fig. 10 is a cross-sectional view showing a relevant part of a second embodiment that uses a traction drive for the first-stage gear-box unit in the internal configuration of the gear box.
{Fig. 11} Fig. 11 is a cross-sectional view showing a relevant part of a first modification of the first-stage gear-box unit in the second embodiment shown in Fig. 10.
{Fig. 12} Fig. 12 is a cross-sectional view showing a relevant part of a second modification of the first-stage gear-box unit in the second embodiment shown in Fig. 10.

### {Description of Embodiments}

Embodiments of a wind turbine generator according to the present invention will be described below with reference to the drawings.

### {First Embodiment}

A wind turbine generator 1 shown in Fig. 3 has a tower 2 standing upright on a foundation 6, a nacelle 3 mounted on the top of the tower 2, and a rotor head 4 provided on the nacelle 3 in a rotatable manner about an axis extending substantially in the horizontal direction.
Multiple wind-turbine blades (wind-turbine rotor blades) 5 are attached to the rotor head 4 so as to extend radially around the rotation axis thereof. Thus, the force of wind striking the wind-turbine blades 5 in the rotation-axis direction of the rotor head 4 is converted to a force that rotates the rotor head 4 about the rotation axis. The wind turbine generator 1 shown in the drawing is of a so-called upwind type in which the wind-turbine blades 5 are configured to rotate in front of the nacelle 3.

Fig. 4 is a perspective view schematically illustrating a drive train 10 according to a first embodiment, showing a state where a rotor-head cover and a nacelle cover have been removed therefrom.
The drive train 10 shown in the drawing includes a hub 11, a main shaft 12, a gear box 20, and a generator 14. In the drawing, reference numeral 13 denotes a high-speed coupling, 15 denotes a transformer, 16 denotes a power converter, and 41 denotes a final output shaft, to be described later.

The hub 11 is disposed within the rotor head 4, and one end of each wind-turbine blade 5 is securely attached thereto so as to rotate together therewith.
The main shaft 12 is a component that connects the hub 11 to the gear box 20 disposed within the nacelle 3 and that transmits the torque of the rotor head 4, rotating due to wind received by the wind-turbine blades 5, to the gear box 20 from the hub 11. The main shaft 12 is rotatably supported by a main bearing 50 (see Fig. 1), to be described later, integrated with the gear box 20. The main bearing 50 in this case is formed by interposing a roller member 53 between a main body 51 and an inner ring 52, such that the inner ring 52 is rotatable relative to the main body 51, which is stationary.

The gear box 20 increases the rotation speed of the main shaft 12, which rotates together with the rotor head 4 and the hub 11, to a rotation speed suitable for driving the generator 14, and then drives the generator 14 via the high-speed coupling 13 coupled to the final output shaft 41. Specifically, the gear box 20 uses a gear or a traction drive to increase the rotation speed of an input shaft (i.e., the rotation speed of the main shaft 12) that is coupled to the main shalt 12 and that rotates together therewith, and drives the generator 14 coupled to the final output shaft 41 of the gear box 20 via the high-speed coupling 13 by transmitting the torque thereto, whereby electricity is generated.

The gear box 20 shown in Figs. 1 and 2 is configured to perform the speed-increasing operation in three stages from a first-stage gear-box unit to a third-stage gear-box unit. The first-stage gear-box unit of the gear box 20 is a star-type gear-box mechanism having a combination of a sun gear (sun member) 21, planetary gears (planetary members) 22, and a ring gear (ring member) 23, and the main bearing 50 that supports the main shaft 12 is integrally combined with the outer periphery. Specifically, the planetary gears 22 that mesh with the outer periphery of the sun gear 21 rotate by meshing with the sun gear 21 and the ring gear 23 at respective positions, but do not revolve around the sun gear 21. Therefore, such a star-type gear box 20 can be readily lubricated by supplying lubricating oil to the planetary gears 22 from appropriate locations.
In the configuration shown in the drawings, the main shaft 12 and the ring gear 23 are butted against each other in the axial direction and are joined together with multiple bolts 24. An outer peripheral surface of the ring gear 23 is fitted in the main bearing 50, that is, press-fitted in an inner peripheral surface 52a of the inner ring 52. An inner peripheral surface of the ring gear 23 is provided with an internal gear 23a that meshes with the planetary gears 22.

The planetary gears 22 are multiple (e.g., four) gears that are meshed with each other and arranged at an equal pitch in the circumferential direction of the sun gear 21. Each planetary gear 22 is provided with rotation shafts 22a and 22b that protrude from opposite side surfaces of the gear. The rotation shafts 22a and 22b are rotatably supported by a front-surface support member 26 and a rear-surface support member 27, respectively, via bearings 25. Therefore, since each planetary gear 22 has a load-bearing structure in which the two rotation shafts 22a and 22b share the role of bearing the load, the rotation shafts are prevented from being tilted by the load, which can cause partial contact between meshing members, thereby increasing the durability of the gear box 20. In this case, the front surface is the rotor head 4 side, whereas the rear surface is the generator 14 side.

The bearings 25 are joined to the front-surface support member 26 and the rear-surface support member 27 by expansion-fitting the outer rings of the bearings 25 thereto, instead of by normal loose-fitting, so as to allow for rattle-free coupling. Furthermore, stays 28 that connect the front-surface support member 26 and the rear-surface support member 27 together are disposed in gaps between the two support members 26 and 27 where there are no planetary gears 22. For example, as shown in Fig. 2, the stays 28 are disposed between neighboring planetary gears 22 in the circumferential direction so that they do not interfere with the rotation of the planetary gears 22.
Accordingly, because the planetary gears 22 are supported by the expansion-fitted rattle-free bearings 25, and the stays 28 are provided to reinforce the first-stage gear-box unit, the main shaft 12 rotating together with the hub 11 that supports the wind-turbine blades 5 is prevented from bending, and partial contact, in the axial direction, between the meshing members of the first-stage gear-box unit can be prevented, thereby allowing for increased durability and reliability of the gear box 20.

The sun gear 21 is meshed with the multiple planetary gears 22 disposed therearound so as to be supported in a rotatable manner on the same axis as the main shaft 12. Specifically, in the first-stage gear-box unit of the gear box 20, the rotating sun gear 21 disposed on the shaft axis meshes with the planetary gears 22 disposed therearound, and the planetary gears 22 mesh with the ring gear 23 disposed around the outer periphery thereof, so that the rotation speed of the ring gear 23 rotating together with the main shaft 12 is increased in accordance with the gear ratio of the gears before the rotation is output from an output shaft 21a of the sun gear 21.

The aforementioned main bearing 50 is securely supported by interposing a frame member 3a of the nacelle 3 between the main body 51 and the rear-surface support member 27 and fastening multiple bolts 54 that extend through the members. Therefore, the main bearing 50 is fitted around the outer periphery of the gear box 20, more specifically, around the first-stage gear-box unit of the star-type gear box 20, so as to be integrated therewith. As a result, the main shaft 20 and the ring gear 23 rotate together with the inner ring 52 press-fitted to the stationary main body 51 supported by the frame member 3a of the nacelle 3.

The gear box 20 shown in the drawings is coupled to the planetary-type second-stage gear-box unit, which has the output shaft 21a of the sun gear 21 disposed at the rear side thereof,
The second-stage gear-box unit includes a sun gear 30, multiple planetary gears 31, a ring gear 32, and an output shaft 33. The second-stage gear-box unit and the third-stage gear-box unit, to be described later, are accommodated within a single casing 34, and this casing 34 is fixed to the aforementioned rear-surface support member 27 by means of multiple bolts 35.

The sun gear 30 has a single input shaft 30a that is coupled to the output shaft 21a of the first-stage gear-box unit via a coupling member 36, and is supported in a rotatable manner due to meshing between a pair of front and rear bearings 37 and the multiple planetary gears 31, to be described below. The sun gear 30 includes multiple shaft portions 30b that are arranged at an equal pitch in the circumferential direction with respect to the input shaft 30a as the shaft axis. The shaft portions 30b rotatably support the planetary gears 31 via bearings 38.
The planetary gears 31 are meshed with an internal gear 32a of the ring gear 32 securely supported by the casing 34 and also with an external gear 33a formed on the outer peripheral surface of the output shaft 33, While rotating around the shaft portions 30b, the planetary gears 31 revolve around the rotating sun gear 30 together with the shalt portions 30b revolving therearound. As a result, the rotation speed of the output shaft 33 is increased from the rotation speed of the input shaft 30a and the sun gear 30, which rotate together with the output shaft 21a, in accordance with the gear ratio of the gears constituting the second-stage gear-box unit.

The output shaft 33, sped-up by the aforementioned second-stage gear-box unit, rotates an internal gear 39a of a gear wheel 39 that constitutes the third-stage gear-box unit by meshing therewith. The gear wheel 39 is rotatably supported by a pair of front and rear bearings 40. An external gear 39b formed on the outer peripheral surface of the gear wheel 39 is meshed with a pinion (not shown). The pinion is attached to the final output shaft 41 (see Fig. 4) that drives the generator 14 via the high-speed coupling 13, and is positioned behind the gear wheel 39 in the plane of Fig. 1 and rotates together therewith.
Therefore, the rotation speed of the output shaft 33 that has been increased by the second-stage gear-box unit is increased to the rotation speed of the final output shaft 41 in accordance with the gear ratio of the gears. Specifically, the gear box 20 increases the rotation speed of the main shaft 12 in three stages from the first-stage gear-box unit to the third-stage gear-box unit, and ultimately increases the rotation speed to the rotation speed of the final output shaft 41 before driving the generator 14.

Accordingly, the gear box 20 having a single-unit structure formed by joining the main bearing 50 that supports the main shaft 12 to the outer periphery of the first-stage gear-box unit, that is, to the ring gear 23, can contribute to reducing the length of the drive train 10 of the wind turbine generator 1 in the axial direction. Therefore, the drive train 10 accommodated within the nacelle 3 can be reduced in overall size and weight. With regard to the nacelle 3 that accommodates the drive train 10, since the load applied to a nacelle base plate in particular can be reduced so as to allow for a size reduction, the nacelle 3 can also be reduced in overall size and weight.

Next, a first modification of the first-stage gear-box unit in the first embodiment described above will be described with reference to Fig. 5. In the following modifications, the configurations of the second-stage gear-box unit and the third-stage gear-box unit are the same as those in the above embodiment, and therefore, detailed descriptions thereof will be omitted. With regard to the first-stage gear-box unit, components similar to those in the above embodiment are given the same reference numerals, and detailed descriptions thereof will be omitted.
Fig. 5 is a cross-sectional view illustrating the configuration of a relevant part of the first-stage gear-box unit according to the first modification, A flange 12a of the main shaft 12 is fixed to the main body 51 of the main bearing 50 by means of multiple bolts 24'. A front-side inner peripheral surface 23b of the ring gear 23 is fitted around the outer peripheral surface of the main body 51 by means of a spline or the like so as to rotate together therewith. The inner ring 52 of the main bearing 50 is reinforced by a support member 55 provided adjacent to the inner peripheral surface 52a. In this case, the main bearing 50 is a pre-loaded bearing that can adjust the contact force of the roller member 53 in accordance with fastening of bolts 56.

The planetary gears 22 are rotatably supported by rotation shafts 22c. In this case, the front sides of the rotation shafts 22c are supported by the bolts 56 that extend through the inner ring 52, and the rear sides thereof are supported by the bearings 25. The outer periphery of each planetary gear 22 meshes with the internal gear 23a of the ring gear 23, whereas the inner periphery thereof meshes with the sun gear 21. A configuration in which the output shaft 21a of the sun gear 21 is coupled to the second-stage gear-box unit is the same as that in the above embodiment.

In the first-stage gear-box unit having the above-described configuration, since the main body 51 and the ring gear 23 rotate together when the main shaft 12 rotates, the planetary gears 22 that mesh with the ring gear 23 and that are supported by the rotation shafts 22c also rotate. Moreover, since the rotation of the planetary gears 22 causes the sun gear 21 meshing therewith to rotate, the rotation speed of the main shaft 12 is increased in accordance with the gear ratio of the gears before the rotation is transmitted to the second-stage gear-box unit from the output shaft 21a.
Because the main shaft 12 is coupled to the main body 51 in the first-stage gear-box unit having the above-described configuration, the main bearing 50 can be reduced in size and is thus advantageous in terms of costs, as compared with the configuration in which the ring gear 23 joined in abutment to the main shaft 12 in the axial direction is fitted in the inner ring 52. Although the aforementioned structure in which the ring gear 23 and the main body 51 rotate together is not limited in particular, a spline joint structure is preferable since it has a core adjusting function for the main shaft 12.

In a second modification shown in Fig. 6, the flange 12a of the main shaft 12 is coupled to the inner ring 52 of the pre-loaded main bearing 50, and the inner peripheral surface of the inner ring 52 is provided with an internal gear 52b that corresponds to the internal gear 23a of the ring gear 23. The internal gear 52b is meshed with the planetary gears 22. Specifically, in this modification, the ring gear 23 is integrated with the main bearing 50, thereby allowing for a reduced number of components. The length in the axial direction can also be reduced, as compared with the above embodiment.
Reference numeral 22d in the drawing denotes a rotation shaft integrated with each planetary gear 22, and 56 denotes a bolt that fixes the flange of the main shaft 12 in position.

A third modification shown in Fig. 7 is similar to the second modification described above in that the flange 12a of the main shaft 12 is coupled to the inner ring 52 of the pre-loaded main bearing 50. A flange 23b of the ring gear 23 is fixed to the rear side of the inner ring 52 by using the main-shaft-securing bolts 56 extending through the inner ring 52. In this case, the flanges 12a and 23b formed in the main shaft 12 and the ring gear 23 extend toward the shaft axis, and the flanges 12a and 23b are fixed to the opposite side surfaces of the inner ring 52, whereby the main bearing 50 can be reduced in size, as compared with the second modification described above.

In a fourth modification shown in Fig. 8, the ring gear 23 is interposed between two segmented sections of a main bearing 50A in the axial direction.
In the main bearing 50A, the main body 51 and the inner ring 52 are each segmented into two sections in the axial direction, and the flange 12a of the main shaft 12 is fixed to the inner ring 52 located at the front side by means of the bolts 56. The front-side inner ring 52 with the main shaft 12 fixed thereto in this manner and the rear-side inner ring 52 have the ring gear 23 interposed therebetween and are integrated with each other by fastening the bolts 56 and bolls 56' from opposite directions. As a result, the distance between front and rear roller members 53 in the axial direction is increased by an amount equivalent to the width of the planetary gears 22 substantially interposed between the inner rings 52. Therefore, the main bearing 50A has increased tolerance against moment generated by the rotation of the main shalt 12.

A fifth modification shown in Fig. 9 is similar to the fourth modification described above in that the ring gear 23 is interposed between two segmented sections of a main bearing 50B in the axial direction, but differs therefrom in the securing position of the main shaft 12 and the interposing position of the ring gear 23.
Specifically, regarding the main bearing 50B in which the main body 51 and the inner ring 52 are each segmented into two sections in the axial direction, the flange 12a of the main shaft 12 is fixed to the main body 51 located at the front side by means of the bolts 56. The front-side main body 51 with the main shaft 12 fixed thereto in this manner and the rear-side main body 51 have the ring gear 23 interposed therebetween and are securely integrated with each other by means of bolts (not shown). As a result, the distance between the front and rear roller members 53 in the axial direction is increased by an amount equivalent to the width of the planetary gears 22 substantially interposed between the main bodies 51. Therefore, the main bearing 50B has increased tolerance against moment generated by the rotation of the main shaft 12.

Furthermore, with this modification, since the ring gear 23 is interposed between the main bodies 51, the diameter of the main bearing 50B can be made smaller than that in the fourth modification described above, thereby allowing for a reduction in the cost of the main bearing 50B.
Reference numeral 22e in the drawing denotes a rotation shaft of each planetary gear 22, and 25A denotes a bearing that rotatably supports each planetary gear 22.

### {Second Embodiment}

Next, a second embodiment that uses a traction drive in place of the gears in the first-stage gear-box unit of the aforementioned gear box 20 will be described with reference to Fig. 10. In this case, the configurations of the second-stage gear-box unit and the third-stage gear-box unit are the same as those in the above embodiment. With regard to the configuration of the first-stage gear-box unit, components similar to those in the above embodiment are given the same reference numerals, and detailed descriptions thereof will be omitted.
In the embodiment shown in Fig. 10, traction drive members, i.e., a sun roller (sun member) 61, planetary rollers (planetary members) 62, and a ring roller (ring member) 63, that transmit power (torque) by traction occurring at contact surfaces are used in place of the sun gear 21, the planetary gears 22, and the ring gear 23 described above.

The main shaft 12 is fixed to the front surface of a main bearing 70 by using multiple bolts 71. The main bearing 70 includes the ring roller 63 that is integrated with the inner peripheral surface thereof.
The planetary rollers 62 are multiple (e.g., three or four) rollers that are arranged at an equal pitch in the circumferential direction between the sun roller 61 and the ring roller 63. In each of the planetary rollers 62, a rotation shaft 62c fixed to a roller body 62a with a bolt 62b is rotatably supported by the corresponding bearing 25. Specifically, each planetary roller 62 rotates at a predetermined position about the rotation shaft 62c supported by the corresponding bearing 25 as a shaft axis.

Like the aforementioned sun gear 21, the sun roller 61 is in contact with the multiple planetary rollers 62 disposed therearound so as to be supported in a rotatable manner on the same axis as the main shaft 12. Specifically, in the first-stage gear-box unit of the gear box 20, the rotating sun roller 61 disposed on the shaft axis is in contact with the multiple planetary rollers 62 disposed therearound so as to generate traction, and the planetary rollers 62 are in contact with the ring roller 63 disposed on the outer periphery thereof so as to generate traction, so that the rotation speed of the ring roller 63 rotating together with the main shaft 12 is increased in accordance with the ratio of the roller diameters before the rotation is output from an output shaft 61a of the sun roller 61.

With such a configuration, since the traction drive is used for increasing the rotation the first-stage gear-box unit functions as both a gear box and a main bearing, thereby allowing for a reduced number of components and a reduction in size and weight, By using the traction drive for performing speed-increasing operation, noise created during operation can be reduced, as compared with a gear box that uses gears.

The configuration of the first-stage gear-box unit that uses the aforementioned traction drive can be modified in the following manner. In the following modifications, the configurations of the second-stage gear-box unit and the third-stage gear-box unit are the same as those in the above embodiment, and therefore, detailed descriptions thereof will be omitted. With regard to the first-stage gear-box unit, components similar to those in the above embodiment are given the same reference numerals, and detailed descriptions thereof will be omitted.
In a first modification shown in Fig. 11, the gears used in the second modification of the first-stage gear-box unit (see Fig. 6) are replaced with a traction drive. Specifically, the flange 12a of the main shaft 12 is coupled to the inner ring 52 of the main bearing 50, and the inner peripheral surface of the inner ring 52 is provided with a ring roller 63A in place of the internal gear of the ring gear. With regard to the ring roller 63A, since the traction surface thereof is in contact with the traction surfaces of the planetary rollers 62, the ring roller 63A is integrated with the main bearing 50.

Since the traction surface of a sun roller 61A and the traction surfaces of planetary rollers 62A are also in contact with each other, traction is generated at the contact surface between the ring roller 63A and the planetary rollers 62A, as well as at the contact surface between the planetary rollers 62A and the sun roller 61A, whereby torque transmission and speed-increasing operation are performed in accordance with the ratio of the roller diameters. Reference numeral 62d in the drawing denotes a rotation shaft of each planetary roller 62A, and 61a denotes a rotation shaft of the sun roller 61A.
With such a configuration, the number of components of the first-stage gear-box unit can be reduced, and the length in the axial direction can also be reduced.

In a second modification shown in Fig. 12, a main bearing 50C is substantially U-shaped in cross section, and the traction surface of the ring roller 63A integrated therewith is bent into a convex shape by fastening bolts 64. Specifically, the main bearing 50C is provided with a pair of opposing sections 57 protruding upward substantially in the vertical direction from the traction surface, and the main shaft 12 is secured using the bolts 64 extending through the opposing sections 57 and the flange 12a of the main shaft 12, In this case, the clamping force of the bolts 64 is adjusted so that the traction surface bends in a bulging manner toward the planetary rings 62A. Consequently, by adjusting the amount of bending, the contact force generated between the traction surfaces of the rings is increased, thereby allowing for increased torque transmission efficiency due to traction.

According to the wind turbine generator of the present invention, since the gear box 20 is made shorter in the axial direction so as to achieve a reduction in size and weight, the entire drive train can also be reduced in length in the axial direction, thereby allowing for a reduction in weight. Consequently, the cost of the drive train itself can be reduced in addition to a reduction in load at the upper section of the tower of the wind turbine generator, which tends to grow in size with an increase in output power. Since such a reduction in load at the upper section of the tower not only contributes to a reduction of the loads on the foundation and the tower but also simplifies the on-site installation process of the nacelle that accommodates the drive train, the cost of the wind turbine generator can also be reduced with respect to these aspects.
The present invention is not to be limited to the above embodiments, and appropriate alterations are permissible so long as they do not depart from the spirit of the invention.

### {Reference Signs List}

- 1: wind turbine generator
- 2: tower
- 3: nacelle
- 4: rotor head
- 5: wind-turbine blade
- 10: drive train
- 11: hub
- 12: main shaft
- 14: generator
- 20: gear box
- 21: sun gear (sun member)
- 22: planetary gear (planetary member)
- 23: ring gear (ring member)
- 41: final output shaft
- 50, 50A, 50B, 50C: main bearing
- 61, 61A: sun roller (sun member)
- 62, 62A: planetary roller (planetary member)
- 63, 63A: ring roller (ring member)

## Claims

1. A wind turbine generator that generates electricity by driving a generator coupled, by means of a drive train, to a rotor head that has wind-turbine rotor blades attached thereto and rotates together therewith,
wherein a gear box of the drive train that transmits torque from the rotor head to the generator includes a star-type gear-box mechanism serving as a first-stage gear-box unit and integrated with a main bearing.

2. The wind turbine generator according to Claim 1, wherein the star-type gear-box mechanism includes a sun member and a planetary member that are constituted of gears or traction drive members.

3. The wind turbine generator according to Claim 1 or 2, wherein the main bearing is integrated with a ring member of the star-type gear-box mechanism.

4. The wind turbine generator according to Claim 3, wherein the ring member is interposed between bearings obtained by segmenting the main bearing into two sections in an axial direction.

5. The wind turbine generator according to any one of Claims 1 to 3, wherein the main bearing is of a pre-loaded type.

6. The wind turbine generator according to any one of Claims 1 to 3, wherein the planetary member has a rotation shaft that is supported at opposite sides thereof,
